# EUROPÄISCHE PATENTSCHRIFT

(11) **EP 2 840 689 B1**
(45) Veröffentlichungstag und Bekanntmachung des Hinweises auf die Patenterteilung: **02.10.2019**
(21) Anmeldenummer: 13181093.9
(22) Anmeldetag: 20.08.2013
(51) Int. Cl.: H02K 5/22

(54) **Kfz-Aggregat und Verfahren zur Befestigung eines Steckers an einem Kfz-Aggregat**
Motor vehicle device and method for fixing a plug to a motor vehicle device
Module de véhicule automobile et procédé de fixation d'un connecteur sur un module de véhicule automobile

(43) Veröffentlichungstag der Anmeldung: 25.02.2015
(73) Patentinhaber: Pierburg Pump Technology GmbH, 41460 Neuss (DE)
(72) Erfinder: Zacher, Wolfgang, 04720 Döbeln (DE); Patzner, Rene, 09337 Hohenstein-Ernstthal (DE)
(74) Vertreter: Patentanwälte ter Smitten Eberlein-Van Hoof Rütten Partnerschaftsgesellschaft mbB

(56) Entgegenhaltungen:
- DE-A1- 3 107 845
- DE-A1- 3 726 839
- DE-A1- 10 012 169
- DE-A1- 10 251 219
- US-A- 5 307 038
- US-A1- 2010 237 721

## Beschreibung

Die Erfindung betrifft eine Vorrichtung sowie ein Verfahren zur Befestigung zumindest eines Steckers an einem elektrisch angetriebenen Kraftfahrzeug-Aggregat (Kfz-Aggregat).

Ein elektrisches oder elektrisch angetriebenes Kfz-Aggregat kann eine Pumpe, beispielsweise eine Kühlmittel- oder Schmiermittelpumpe, eine Stelleinrichtung, beispielsweise eine Drosselklappenstelleinrichtung, oder ein anderes elektrisch angetriebenes Aggregat in einem Fahrzeug sein. Das Kfz-Aggregat ist sowohl mechanisch als auch elektrisch mit der Fahrzeugstruktur bzw. der Fahrzeug-Elektrik verbunden. Es ist bekannt, dass die elektrische Schnittstelle zwischen dem Aggregat und dem Fahrzeug als eine Stecker-Gegenstecker-Einrichtung ausgebildet ist. Die Stecker-Gegenstecker-Einrichtung besteht aus zwei zueinander korrespondierenden Kopplungsteilen, insbesondere einem Stecker und einem Gegenstecker, von denen ein Kopplungsteil mit dem Aggregat und das andere mit der Fahrzeug-Elektrik verbunden ist. Aus der DE 102 51 219 A1 ist beispielsweise ein motorbetriebener Kompressor bekannt, bei dem zum Verbinden des Kompressors mit einer Stromquelle ein Stecker auf einer oberen Außenwandung des Kompressors vorgesehen ist.

Fahrzeuge und deren Aggregate können aufgrund stark schwankender oder extremer Betriebsbedingungen, beispielsweise hinsichtlich der Umgebungstemperatur, -luftfeuchtigkeit oder Fahrzeugvibration, hohen Belastungen ausgesetzt sein. Für eine sichere und dauerhafte Fixierung der Stecker-Gegenstecker-Einrichtung ist daher eine geeignete Befestigung erforderlich. Darüber hinaus kann das Aggregat in verschiedene Fahrzeugmodelle verbaut werden, bei denen die Stecker-Gegenstecker-Einrichtung an unterschiedlichen Positionen an dem Aggregat vorteilhaft sein kann. Ferner ist der Einbauraum des Aggregats und der Stecker-Gegenstecker-Einrichtung in dem Motorraum eines Fahrzeugs zumeist stark begrenzt. Es ist bekannt, den aggregatseitig angeordneten Stecker außen an dem Aggregat mittels Schrauben und/oder Spannstiften zu befestigen.

Eine derartige Befestigung erfordert jedoch den Einsatz zusätzlicher Verbindungselemente sowie korrespondierende Einrichtungen zur Aufnahme der Verbindungselemente, wie z.B. Bohrungen und/oder Gewinde. Hierzu ist zumeist eine Materialverstärkung in dem Gehäuse des Aggregats erforderlich. Dadurch ist das Aggregat jedoch weniger kompakt und relativ schwer. Ferner können relativ hohe Herstellungs- und Montagekosten entstehen. Es ist daher Aufgabe der vorliegenden Erfindung, eine Vorrichtung und ein Verfahren für eine einfache, sichere und kostengünstige Befestigung des Steckers an dem Kfz-Aggregat zu schaffen.

Die Lösung der Aufgabe erfolgt erfindungsgemäß durch eine Vorrichtung mit den Merkmalen des Anspruchs 1 sowie durch ein Verfahren mit den Merkmalen des Anspruchs 9.

Das elektrische Kfz-Aggregat umfasst eine Arbeitseinrichtung, einen elektrischen Antriebsmotor zum Antrieb der Arbeitseinrichtung, eine Kommutierungseinrichtung zur Ansteuerung des Antriebsmotors und ein Aggregatgehäuse. Zur elektrischen Kopplung des Kfz-Aggregats an die Fahrzeug-Elektrik ist ein separat ausgebildeter Stecker vorgesehen, an dem ein korrespondierender Gegenstecker elektrisch und mechanisch gekoppelt werden kann. Der Stecker ist außen an dem Aggregatgehäuse angeordnet. Das Aggregatgehäuse weist eine Öffnung auf, durch die sich zumindest eine elektrische Leitung erstreckt, die in den Stecker geführt ist. An einer Außenseite des Aggregatgehäuses ist eine Befestigungsanordnung zum Fixieren zumindest des Steckers angeordnet, wobei die Befestigungsanordnung zumindest einen von dem Aggregatgehäuse nach außen hervorstehenden Haltesteg aufweist, und der Haltesteg zumindest teilweise um einen Steckerflansch des Steckers verbogen ist, so dass der Stecker durch Formschluss an dem Aggregatgehäuse fixiert ist.

Das elektrische Kfz-Aggregat kann jedes beliebige, mechanisch agierende und elektrisch angetriebene Aggregat eines Fahrzeugs sein. Als Arbeitseinrichtung ist derjenige Teil des Aggregats zu verstehen, der den gewünschten physikalischen Effekt des Aggregats hervorruft, beispielsweise bei einer Pumpe das Pumpenrad mit Pumpenwelle. Der Antrieb des Kfz-Aggregats bzw. der Arbeitseinrichtung erfolgt elektrisch, das heißt mittels eines Elektromotors. Zur Steuerung und/oder Regelung des elektrischen Antriebs ist eine Kommutierungseinrichtung vorgesehen. Die Kommutierungseinrichtung kann mechanisch oder elektrisch kommutiert sein.

Zur Ansteuerung und zur Stromversorgung des Aggregats ist das Aggregat über zumindest eine elektrische Leitung mit der Fahrzeug-Elektrik verbunden. Unter "elektrische Leitung" ist vorliegend nicht nur die elektrische Verbindung als solche, sondern auch ein hierzu erforderliches elektrisch leitendes Kabel zu verstehen. Zur Herstellung der elektrischen Leitung bzw. zum Anschließen des Aggregats an die Fahrzeug-Elektrik ist zumindest eine elektrische Schnittstelle vorgesehen. Hierzu ist eine Stecker-Gegenstecker-Einrichtung vorgesehen, so dass das Aggregat mit dem Fahrzeug ohne größeren Aufwand gekoppelt werden kann.

Die Stecker-Gegenstecker-Einrichtung umfasst einen Stecker und einen korrespondierenden Gegenstecker, so dass der Stecker und der Gegenstecker miteinander koppelbar sind. Die Stecker-Gegenstecker-Einrichtung kann als jede beliebige Form einer elektrischen Schnittstelle ausgebildet sein. Die miteinander korrespondierenden Stecker können jeweils als ein gewöhnlicher Stecker und Gegenstecker ausgebildet sein, beispielsweise kann der Stecker einen Steckerstift und der Gegenstecker eine korrespondierende Steckerbuchse aufweisen, oder umgekehrt. Ferner können der Stecker und der Gegenstecker speziell ausgebildete, miteinander korrespondierende mechanische und/oder elektrische Kopplungselemente aufweisen. Die Kopplung der Stecker kann lösbar oder dauerhaft fest sein. Ferner kann an der Stecker-Gegenstecker-Einrichtung eine Sicherung gegen ein Lösen der Kopplung vorgesehen sein, beispielsweise eine Rast- oder Clipeinrichtung.

Das Aggregatgehäuse kann als ein Bauteil, das das gesamte Aggregat umgibt, oder als mehrere einzelne Gehäuseteile ausgebildet sein, die das Aggregat bereichsweise umgeben. Beispielsweise kann das Aggregatgehäuse aus einem Gehäuseteil für die Arbeitseinrichtung, einem Gehäuseteil für den Antriebsmotor und einem Gehäuseteil für die Kommutierungseinrichtung bestehen. Die Befestigungsanordnung ist vorzugsweise im Bereich der Kommutierungseinrichtung an dem Aggregatgehäuse angeordnet. Das Aggregatgehäuse ist vorzugsweise aus Aluminium hergestellt.

Erfindungsgemäß ist die Befestigungsanordnung zur Befestigung des Steckers als zumindest ein Haltesteg ausgebildet. Der Haltesteg ist zumindest teilweise um den Steckerflansch des Steckers verbogen und bildet einen Falz oder eine Hinterschneidung, die sich teilweise über den Steckerflansch erstreckt. Dadurch ist der Stecker an dem Steckerflansch von dem Haltesteg zumindest einseitig formschlüssig gehalten. Eine zusätzliche kraftschlüssige oder stoffschlüssige Fixierung des Steckers an dem Aggregatgehäuse ist erfindungsgemäß nicht erforderlich. In einem offenen bzw. nicht-verbogenen Zustand des Haltestegs steht der Haltesteg senkrecht bzw. radial von dem Aggregatgehäuse hervor und überragt den Steckerflansch des Steckers nach außen hin. Dadurch kann der Haltesteg nach Einsetzen des Steckers ohne größeren Aufwand um den Steckerflansch des Steckers verbogen werden.

Die Befestigungsanordnung kann mehrere Haltestege umfassen. Wenn nur ein Haltesteg der Befestigungsanordnung ausgebildet ist, kann der Stecker mit einer Seite an einem Absatz oder einer Vertiefung des Aggregatgehäuses anliegen und an der gegenüberliegenden Seite mit dem Steckerflansch von dem verbogenen Haltesteg formschlüssig fixiert sein. Der Steckerflansch liegt vorzugsweise mit einer außen liegenden Stirnseite an dem Haltesteg an, so dass der Haltesteg den Steckerflansch in einem Stirnseitenbereich sowie teilweise in einem Flachseitenbereich des Steckerflansches umgibt. Dadurch kann der Steckerflansch bzw. der Stecker bezüglich mehrerer Richtungen formschlüssig fixiert sein.

Der Steckerflansch ist als ein flacher Steg oder Rahmen ausgebildet, der seitlich von dem Stecker hervorsteht. Der Steckerflansch steht insbesondere in eine Richtung quer zu der Steckachse des Steckers hervor, das heißt, quer zu einer Verbindungslinie zwischen einer Frontseite und einer Rückseite, des Steckers.

Der Stecker und der Gegenstecker umfassen jeweils einen elektrisch nicht-leitenden Steckerkörper und zumindest eine elektrische Leitung, die von dem Steckerkörper gehalten wird. Die elektrische Leitung ist vorzugsweise in dem Steckerkörper durch Formschluss gehalten und an der Rückseite des Steckerkörpers aus dem Steckerkörper herausgeführt. An der gegenüberliegenden Frontseite des Steckerkörpers ist eine elektrische Kontaktfläche zum Koppeln der elektrischen Verbindung ausgebildet, so dass der Stecker mit einer Rückseite an dem Aggregatgehäuse anliegen kann und an einer Frontseite mit einem Gegenstecker gekoppelt werden kann. Die Vormontage des Steckers ermöglicht somit eine relativ unkomplizierte Endmontage des Steckers an dem Aggregat.

Vorzugsweise weist das Aggregatgehäuse einen Gehäuseflansch mit einer ebenen Flanschfläche auf. Vorzugsweise wird der Stecker an dem Gehäuseflansch fixiert, insbesondere an der ebenen Flanschfläche. Der Stecker liegt dabei mit einer Seite bevorzugt flächig an der ebenen Flanschfläche an. Dadurch kann der Stecker insbesondere an einem zylinderförmigen Aggregatgehäuse in relativ einfacher Weise fixiert werden. Die ebene Flanschfläche kann auch in einer Ausnehmung in dem Gehäuseflansch ausgebildet sein und mit der Rückseite des Steckers bzw. des Steckersockels korrespondieren. Dadurch kann der Stecker mit der Rückseite im Bereich der Öffnung des Aggregatgehäuses an der Flanschfläche flächig anliegen und die Öffnung vollständig umgegeben. Dadurch kann eine Dichtung zwischen Aggregatgehäuse und dem Stecker ohne größeren Aufwand hergestellt werden. Alternativ kann der Stecker an der Rückseite eine zu der gebogenen Fläche des zylinderförmigen Aggregatgehäuses korrespondierende Fläche aufweisen, so dass der Stecker mit der Rückseite an dem Aggregatgehäuse und mit dem Steckerflansch an der ebenen Fläche des Gehäuseflansches anliegt.

In einer vorteilhaften Ausgestaltung weist die Befestigungsanordnung zumindest zwei gegenüberliegende und voneinander beabstandet angeordnete Haltestege auf, zwischen denen zumindest der aggregatseitig angeordnete Stecker angeordnet ist. Zumindest einer der zwei Haltestege ist um den Steckerflansch des Steckers verbogen, so dass der Stecker an dem Aggregatgehäuse formschlüssig fixiert ist. Vorzugsweise sind beide gegenüberliegende Haltestege um den Steckerflansch des Steckers verbogen. Die Haltestege bilden dadurch zwei einander gegenüberliegende Hinterschneidungen, die sich jeweils zumindest teilweise über dem Steckerflansch des Steckers erstrecken. Dadurch ist der Stecker an dem Steckerflansch von den beiden Haltestegen formschlüssig fixiert. Der Steckerflansch kann selbstverständlich auch von mehr als zwei Haltestegen zumindest teilweise umgeben und formschlüssig gehalten sein. Es ist auch möglich, dass der aggregatseitig angeordnete Stecker von einem ersten Haltesteg und der mit dem Stecker gekoppelte Gegenstecker von einem zweiten Haltesteg formschlüssig an dem Aggregat fixiert sind. Eine weitere kraftschlüssige oder stoffschlüssige Fixierung des Steckers an dem Aggregatgehäuse ist nicht erforderlich.

Besonders bevorzugt ist der Steckerflansch parallel zu der Rückseite des Steckers ausgebildet. Der Steckerflansch kann vollständig oder teilweise umlaufend, das heißt abschnittsweise, ausgebildet sein. Dadurch kann jeweils ein Haltesteg der Befestigungsanordnung für jeweils einen Steckerflanschabschnitt vorgesehen sein. Der Steckerflansch ist vorzugsweise derart ausgebildet, dass der Haltesteg der Befestigungsanordnung um den Steckerflansch verbogen werden kann und den Stecker somit mechanisch an dem Aggregat fixieren kann. Vorzugsweise liegt der Steckerflansch mit zumindest einer äußeren Stirnseite an dem Haltesteg an. Dadurch kann der Steckerflansch von dem Haltesteg in einem Stirnseitenbereich sowie teilweise in einem Flachseitenbereich umgeben und in mehrere Richtungen formschlüssig fixiert sein.

Vorzugsweise weist der Stecker einen Steckersockel auf, der an der Rückseite des Steckers ausgebildet ist. Dadurch kann der Stecker an dem Steckersockel seitlich fixiert werden, Besonders bevorzugt korrespondiert der Steckersockel mit einem Bereich des Aggregatgehäuses oder des Gehäuseflansches, beispielsweise einer Ausnehmung, in die der Steckersockel eingesetzt werden kann. Dadurch ist das Aggregat relativ kompakt. Ferner kann der Steckersockel mit einer Form oder einer Führungseinrichtung korrespondieren, so dass der Steckersockel in nur einer möglichen Position in eine Ausnehmung in dem Aggregatgehäuse oder Gehäuseflansch einsetzbar ist. Dadurch ist eine einfache Montage des Steckers an dem Aggregat ermöglicht.

In einer vorteilhaften Ausgestaltung ist an dem Stecker eine Steckerdichtung angeordnet. Die Steckerdichtung ist bevorzugt als ein Dichtungsring ausgebildet und in einer Nut angeordnet, die sich seitlich umlaufend in dem Steckersockel erstreckt. Dadurch kann die Öffnung in dem Aggregatgehäuse bzw. der Innenraum des Aggregats effektiv gegenüber der Umgebung des Aggregats abgedichtet werden. Die seitliche Abdichtung, insbesondere die Dichtung quer zu der Steckrichtung des Steckers und quer zu der Steckerbefestigung an dem Aggregat, ermöglicht, dass die Dichtung nicht in einer Kraftflussrichtung angeordnet ist. Dadurch ist die Qualität der Dichtung nicht von der Befestigung abhängig. Ferner trägt die Dichtung, insbesondere durch das Anliegen an einer korrespondierenden Seitenwand des Aggregatgehäuses oder des Gehäuseflansches, zu der seitlichen Fixierung des Steckers bei.

Vorzugsweise ist die Befestigungsanordnung bzw. der Haltesteg einstückig mit dem Aggregatgehäuse ausgebildet. Dadurch sind zusätzliche Befestigungselemente nicht erforderlich. Der Stecker weist bevorzugt eine zu dem Aggregatgehäuse in dem Bereich der Befestigungsanordnung korrespondierende Form oder Seitenwandung auf. Beispielsweise kann der Stecker an der Rückseite eine Fläche mit einem zu dem Aggregatgehäuse korrespondierenden Radius oder Winkel aufweisen. Dadurch kann der Stecker relativ flach auf dem Aggregatgehäuse anliegen, so dass eine kompakte Bauform des Aggregats ermöglicht ist. Es ist grundsätzlich auch möglich, dass die Befestigungsanordnung an einem separaten Zwischenteil ausgebildet ist, beispielsweise einer Ringschelle, die an dem Aggregatgehäuse festgelegt ist. Dadurch kann die Befestigungsanordnung in einer Vormontage hergestellt werden. Ferner ist ein Austausch der Befestigungsanordnung ohne größeren Aufwand möglich.

Vorzugsweise ist das Aggregatgehäuse im Wesentlichen zylinderförmig. Dadurch kann das Aggregat, insbesondere ein Aggregat mit einem Rotorstrang, sehr kompakt aufgebaut sein, so dass das Aggregat in einem Motorraum eines Fahrzeuges relativ wenig Platz benötigt. Ferner kann das gleiche Aggregat in unterschiedliche Fahrzeugmodelle verbaut werden, wobei das Aggregat in dem jeweiligen Motorraum insbesondere hinsichtlich der Anordnung des Steckers an dem Aggregat individuell in eine vorteilhafte Lage verdreht bzw. positioniert werden kann.

In einer vorteilhaften Ausgestaltung ist die Befestigungsanordnung bzw. der Haltesteg einstückig mit dem Gehäuseflansch ausgebildet. Dadurch sind zusätzliche Verbindungs- und/oder Dichtelemente nicht erforderlich.

Vorzugsweise weist das Aggregatgehäuse und/oder der Gehäuseflansch eine Ausnehmung zur Aufnahme zumindest des Steckers auf. Die Ausnehmung kann als eine Vertiefung, Einbuchtung oder Kerbe ausgebildet sein, in die der Stecker zumindest teilweise und vorzugsweise von außen einsetzbar ist. Bei einem zylinderförmigen Aggregatgehäuse ist der Stecker vorzugsweise radial von außen in die Ausnehmung einsetzbar.

Gemäß einem Verfahren zur Befestigung zumindest des Steckers der Stecker-Gegenstecker-Einrichtung an dem Kfz-Aggregat wird der Stecker auf das Aggregatgehäuse oder auf den Gehäuseflansch aufgesetzt. In einem darauffolgenden Verfahrensschritt wird zumindest ein Haltesteg zumindest teilweise um den Steckerflansch des Steckers verbogen, so dass der Stecker an dem Aggregat formschlüssig fixiert wird.

Vorzugsweise wird der Stecker mit der Rückseite voran auf das Aggregatgehäuse oder auf den Gehäuseflansch aufgesetzt, so dass der Steckerflansch des Steckers an der ebenen Fläche des Gehäuseflansches und/oder die Rückseite des Steckersockels an dem Aggregatgehäuse anliegen kann. Vorzugsweise umgibt der Stecker in der aufgesetzten Position die Öffnung des Aggregatgehäuses zumindest teilweise, besonders bevorzugt vollständig.

Gemäß einem zusätzlichen vorteilhaften Verfahrensschritt wird vor dem Aufsetzen des Steckers auf das Aggregatgehäuse oder auf den Gehäuseflansch die elektrische Leitung, die an der Rückseite des Steckers aus dem Stecker austritt, in die Öffnung des Aggregatgehäuses geführt, so dass die elektrische Leitung nach innen in das Aggregatgehäuse hineinragt.

Gemäß einem weiteren vorteilhaften Verfahrensschritt wird vor dem Aufsetzen des Steckers auf das Aggregatgehäuse oder auf den Gehäuseflansch der Stecker in eine Ausnehmung des Aggregatgehäuses und/oder des Gehäuseflansches eingeschoben. Dadurch kann der Stecker in der Ausnehmung gegen eine Seitenbewegung fixiert werden. Vorzugsweise wird der Stecker mit der Rückseite voran in die Ausnehmung eingeschoben.

Gemäß einem weiteren vorteilhaften Verfahrensschritt wird vor dem Aufsetzen des Steckers auf das Aggregatgehäuse oder auf den Gehäuseflansch eine Steckerdichtung in eine in dem Steckersockel ausgebildeten Steckernut eingesetzt. Dadurch kann die Öffnung des Aggregatgehäuses bzw. der Innenraum des Aggregats gegenüber der Umgebung vollständig abgedichtet werden.

Ein Ausführungsbeispiel ist in den Figuren dargestellt und wird nachfolgend beschrieben.
Figur 1 zeigt eine perspektivische Ansicht einer Kfz-Pumpe mit einer erfindungsgemäßen Befestigungsanordnung in einer den Stecker fixierenden Lage.
Figur 2 zeigt einen Ausschnitt einer Schnittdarstellung einer Kfz-Pumpe mit einer erfindungsgemäßen Befestigungsanordnung in einer den Stecker fixierenden Lage.
Figur 3 zeigt eine Schnittdarstellung einer Kfz-Pumpe mit einer erfindungsgemäßen Befestigungsanordnung in einer zum Einsetzen des Steckers offenen Lage.
Figur 4 zeigt eine Schnittdarstellung einer Kfz-Pumpe mit einer erfindungsgemäßen Befestigungsanordnung in einer den Stecker fixierenden Lage.

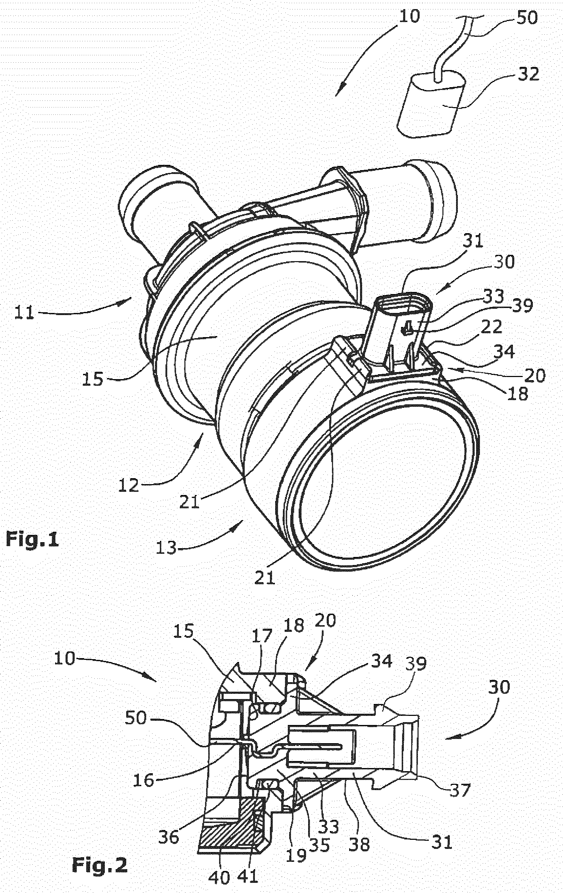

Wie in Figur 1 gezeigt, weist das Aggregat 10, vorliegend eine Kfz-Pumpe, an einem stirnseitigen Ende eine Arbeitseinrichtung 11 auf, insbesondere eine Pumpenwelle und ein Pumpenrad mit zwei hieran angeordneten Strömungskanälen. In Längserstreckung des Aggregats sind ein elektrischer Antriebsmotor 12 zum Antrieb des Pumpenrads und eine Kommutierungseinrichtung 13 bzw. eine Steuerungs-Elektronik zur Ansteuerung des Antriebsmotors 12 angeordnet. Ein im Wesentlichen zylinderförmiges Aggregatgehäuse 15 umgibt die vorgenannten Aggregatkomponenten. An einer Außenseite des Aggregatgehäuses 15 in dem Bereich der Kommutierungseinrichtung 13 ist einen Gehäuseflansch 18 angeordnet.

Zur Ansteuerung und zur Stromversorgung des Aggregats 10 ist das Aggregat 10 über zumindest eine elektrische Leitung 50 mit einer nicht dargestellten Fahrzeug-Elektrik bzw. Fahrzeug-Elektronik verbindbar. Zur Herstellung der elektrischen Leitung 50 bzw. zum Anschließen des Aggregats 10 an die Fahrzeug-Elektrik ist zumindest eine elektrische Schnittstelle vorgesehen, die vorliegend als eine Stecker-Gegenstecker-Einrichtung 30 ausgebildet ist.

Die Stecker-Gegenstecker-Einrichtung 30 ist als eine Steckverbindung ausgebildet und umfasst einen Stecker 31 und einen Gegenstecker 32, die miteinander koppelbar sind. Der Stecker 31 und der Gegenstecker 32 bestehen jeweils aus einem Steckerkörper 33 mit zumindest einer darin gehaltenen elektrischen Leitung 50 mit einer Kontaktfläche, über die der Stecker 31 mit dem Gegenstecker 32 bzw. die elektrische Leitung 50 elektrisch gekoppelt werden kann.

Der Stecker 31 ist aggregatseitig angeschlossen und umfasst ein Ende der elektrischen Leitung 50, die zu der Kommutierungseinrichtung 13 des Aggregats 10 geführt ist. Der Gegenstecker 32 ist fahrzeugseitig angeschlossen und umfasst ein Ende der elektrischen Leitung 50, die zu der nicht dargestellten Fahrzeug-Elektrik geführt ist. Durch das Koppeln des Steckers 31 mit dem Gegenstecker 32 gelangen die an den Steckerkörpern 33 angeordneten Kontaktflächen der elektrischen Leitung 50 in Berührung, so dass eine elektrische Verbindung zwischen den beiden Abschnitten der elektrischen Leitung 50 hergestellt werden kann.

Der Stecker 31 ist über die Befestigungseinrichtung 20 an dem Gehäuseflansch 18 des Aggregatgehäuses 15 fixiert. Dazu liegt der Stecker 31 mit einem Steckerflansch 34 flächig an dem Gehäuseflansch 18 auf. Seitlich des Steckerflansches 34 ist die Befestigungsanordnung 20 des Gehäuseflansches 18 angeordnet. Die Befestigungsanordnung 20 weist zwei voneinander beabstandet angeordnete Haltestege 21, 22 auf. Der Haltesteg 21 besteht aus zwei Haltestegabschnitten, das heißt der Haltesteg 21 ist als ein über die Breite des Gehäuseflansches 18 unterbrochener Haltesteg 21 ausgebildet. Der Haltesteg 22 ist dagegen als ein einzelner, sich über die gesamte Breite des Gehäuseflansches 18 erstreckender Haltesteg 22 ausgebildet. Der Haltesteg 21 besteht somit aus mehreren Abschnitten, der Haltesteg 22 ist einstückig ausgebildet. Die Haltestege 21, 22 sind zumindest teilweise um den Steckerflansch 34 des Steckers 31 verbogen, so dass der Stecker 31 von den verbogenen Haltestegen 21, 22 formschlüssig gehalten wird.

Wie in Figur 2 gezeigt, ist der Stecker 31 mit einem Steckersockel 35 in eine Ausnehmung 17 des Gehäuseflansches 18 bzw. des Aggregatgehäuses 15 eingesetzt. Die Ausnehmung (17) ist als eine Vertiefung, ein Steckplatz oder ein sogenannter Slot in dem Gehäuseflansch 18 bzw. dem Aggregatgehäuse 15 ausgebildet. Vorliegend ist der Stecker 31 radial von außen in die Ausnehmung 17 eingesetzt. In der Ausnehmung 17 bzw. in dem Aggregatgehäuse 15 ist eine Öffnung 16 vorgesehen, durch die der aggregatseitige Teil der elektrischen Leitung 50 geführt ist.

Die durch die Öffnung 16 geführte elektrische Leitung 50 ist an der Außenseite des Aggregatgehäuses 15 an einer Rückseite 36 des Steckerkörpers 33 in den Steckers 31 geführt. Innerhalb des Steckerkörpers 33 des Steckers 31 ist die elektrische Leitung 50 in einem kurvenförmigen Kanal geführt, so dass die elektrische Leitung 50 von dem Steckerkörper 33 formschlüssig gehalten wird. In dem Stecker 31 ist eine Buchse mit einer Kontaktfläche der elektrischen Leitung 50 für eine elektrische Kopplung ausgebildet. Zwischen einer Frontseite 37 und der Rückseite 36 weist der Steckerkörper 33 zumindest eine Seitenwand 38 auf, die als eine Führung oder Schiene zum passgenauen Auf- oder Einschieben des Gegensteckers 32 auf den Stecker 31 ausgebildet ist. Ferner ist an der Seitenwand 38 eine Rasteinrichtung 39 zur mechanischen Sicherung der Kopplung des Steckers 31 mit dem Gegenstecker 32 angeordnet.

Der Stecker 31 liegt mit einem Steckerflansch 34 an einer ebenen Fläche 19 an, die an dem Gehäuseflansch 18 ausgebildet ist. Der Steckerflansch 34 ist als ein flacher, im Bereich der Seitenwand 38 von dem Stecker 31 nach außen hervorstehender Steg ausgebildet. Der Steckerflansch 34 ist parallel zu der Rückseite 36 des Steckers 31 und vollständig um den Stecker 31 umlaufend ausgebildet.

An dem Steckersockel 35 ist seitlich eine Steckernut 40 ausgebildet, in die ein Dichtring 41 eingesetzt ist. Die Steckernut 40 und der Dichtring 41 sind um den Steckersockel 35 vollständig umlaufend ausgebildet. Der Dichtring 41 liegt an der Ausnehmung 17 des Gehäuseflansches 18 an und dichtet die Öffnung 16 bzw. den Innenraum des Aggregats 10 gegenüber der Umgebung ab.

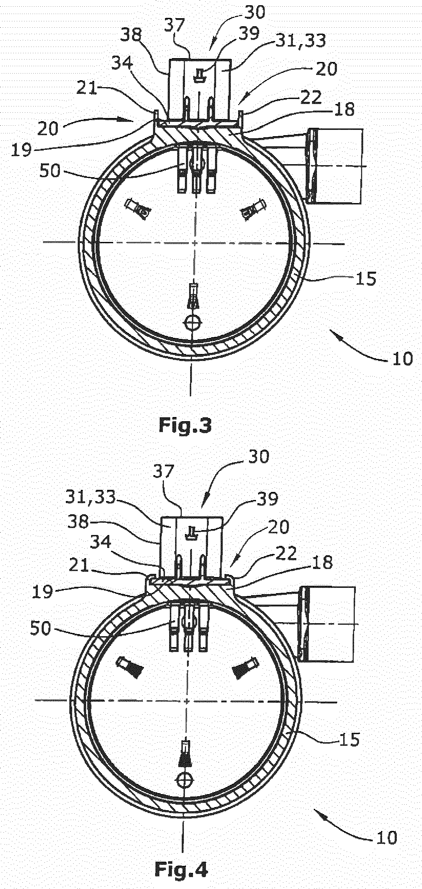

In Figur 3 sind die Haltestege 21, 22 in einem ursprünglichen Zustand gezeigt, in dem die Haltestege 21, 22 nicht um den Steckerflansch 34 des Steckers 31 verbogen sind. Die Haltestege 21, 22 sind entsprechend in einer offenen Lage. Die Haltestege 21, 22 bestehen aus zwei voneinander beabstandet angeordneten Haltestegen 21, 22, wobei zwischen den Haltestegen 21, 22 der Steckerflansch 34 des Steckers 31 angeordnet ist.

Der Stecker 31 liegt mit einem Steckerflansch 34 auf einer ebenen Fläche 19 des Gehäuseflansches 18 flächig auf. In einem Seitenbereich der ebenen Fläche 19 des Gehäuseflansches 18 ist die Befestigungsanordnung 20 angeordnet. Die Befestigungsanordnung 20 bzw. die Haltestege 21, 22 stehen seitlich des Steckerflansches 34 senkrecht bzw. radial nach außen von dem Gehäuseflansch 18 hervor, so dass der Stecker 31 von den Haltestegen 21, 22 nicht fixiert ist. Die Stirnseiten des Steckerflansches 34 des Steckers 31 liegen an den nicht verbogenen Haltestegen 21, 22 an.

In Figur 4 sind die in Figur 3 gezeigten, nicht-verbogenen Haltestege 21, 22 um den Steckerflansch 34 des Steckers 31 verbogen, so dass sich die Befestigungseinrichtung 20 bzw. die Haltestegen 21, 22 in einer geschlossenen Lage befinden. Die einander gegenüberliegenden Haltestege 21, 22 bilden in der geschlossenen Lage jeweils eine Hinterschneidung, einen Umschlag oder einen Falz, die bzw. der jeweils um die Stirnseite des Steckerflansches 34 verbogen ist. Dadurch ist der Stecker 31 an dem Steckerflansch 34 von den beiden Haltestegen 21, 22 formschlüssig gehalten. Der Stecker 31 ist folglich gegen ein Herausziehen oder Herausgleiten von dem Gehäuseflansch 18 bzw. aus der Ausnehmung 17 gesichert.

### Referenzliste

- 10: Kfz-Aggregat
- 11: Arbeitseinrichtung
- 12: Motor
- 13: Steuerungs-Elektronik
- 15: Aggregatgehäuse
- 16: Öffnung
- 17: Ausnehmung
- 18: Gehäuseflansch
- 19: ebene Fläche
- 20: Befestigungsanordnung
- 21: erster Haltesteg
- 22: zweiter Haltesteg
- 30: Stecker-Gegenstecker-Einrichtung
- 31: Stecker
- 32: Gegenstecker
- 33: Steckerkörper
- 34: Steckerflansch
- 35: Steckersockel
- 36: Rückseite
- 37: Frontseite
- 38: Seitenwand
- 39: Rasteinrichtung
- 40: Steckernut
- 41: Steckerdichtung
- 50: Elektrische Zuleitung

## Patentansprüche

1. Elektrisches Kfz-Aggregat (10) mit
einer Arbeitseinrichtung (11),
einem elektrischen Antriebsmotor (12) zum Antrieb der Arbeitseinrichtung (11),
einer Kommutierungseinrichtung (13) zur Ansteuerung des Antriebsmotors (12),
einem separat ausgebildeten Stecker (31), an dem ein korrespondierender Gegenstecker (32) elektrisch und mechanisch gekoppelt werden kann,
einem Aggregatgehäuse (15) mit einer Öffnung (16), durch die sich zumindest eine elektrische Leitung (50) erstreckt, die in den Stecker (31) geführt ist, und
einer an einer Außenseite des Aggregatgehäuses (15) angeordneten Befestigungsanordnung (20) zum Fixieren des Steckers (31), **dadurch gekennzeichnet, dass**
die Befestigungsanordnung (20) zumindest einen von dem Aggregatgehäuse (15) nach außen hervorstehenden Haltesteg (21) aufweist, und der Haltesteg (21) zumindest teilweise um einen Steckerflansch (34) des Steckers (31) verbogen ist, so dass der Stecker (31) durch Formschluss an dem Aggregatgehäuse (15) fixiert ist,
das Aggregatgehäuse (15) einen Gehäuseflansch (18) mit einer Flanschfläche (19) aufweist,
der Steckerflansch (34) als ein Steg oder Rahmen ausgebildet ist, der seitlich von dem Stecker (31) hervorsteht, teilweise oder vollständig um den Stecker (31) umlaufend ausgebildet und flächig an dem Gehäuseflansch (18) anliegt, und
der Stecker (31) einen elektrisch nicht-leitenden Steckerkörper (33) und zumindest eine elektrische Leitung (50) umfasst, die von dem Steckerkörper (33) gehalten wird.

2. Elektrisches Kfz-Aggregat nach Anspruch 1, **dadurch gekennzeichnet, dass** die Befestigungsanordnung (20) zumindest zwei gegenüberliegend und voneinander beabstandet angeordnete Haltestege (21, 22) aufweist, und der Stecker (31) zwischen den Haltestegen (21, 22) angeordnet ist, und zumindest einer der zwei Haltestege (21, 22) zumindest teilweise um den Steckerflansch (34) des Steckers (31) verbogen ist, so dass der Stecker (31) durch Formschluss an dem Aggregatgehäuse (15) fixiert ist.

3. Elektrisches Kfz-Aggregat (10) nach einem der voranstehenden Ansprüche, **dadurch gekennzeichnet, dass** der Stecker (31) einen Steckersockel (35) aufweist, der an einer Rückseite (36) des Steckers (31) ausgebildet ist.

4. Elektrisches Kfz-Aggregat (10) nach einem der voranstehenden Ansprüche, dass an dem Stecker (31) eine Steckerdichtung (41) angeordnet ist.

5. Elektrisches Kfz-Aggregat (10) nach einem der voranstehenden Ansprüche, **dadurch gekennzeichnet, dass** der Haltesteg (21, 22) einstückig mit dem Aggregatgehäuse (15) ausgebildet ist.

6. Elektrisches Kfz-Aggregat (10) nach einem der voranstehenden Ansprüche, **dadurch gekennzeichnet, dass** das Aggregatgehäuse (15) zylinderförmig ausgebildet ist.

7. Elektrisches Kfz-Aggregat (10) nach Anspruch 6, **dadurch gekennzeichnet, dass** der Haltesteg (21, 22) einstückig mit dem Gehäuseflansch (18) ausgebildet ist.

8. Elektrisches Kfz-Aggregat (10) nach einem der voranstehenden Ansprüche, **dadurch gekennzeichnet, dass** in dem Aggregatgehäuse (15) und/oder in dem Gehäuseflansch (18) eine Ausnehmung (17) ausgebildet ist, in die der Stecker (31) zumindest teilweise eingesetzt werden kann.

9. Verfahren zur Befestigung zumindest eines Steckers (31) einer Stecker-Gegenstecker-Einrichtung (30) an einem Kfz-Aggregat (10) nach einem der voranstehenden Ansprüche, mit den folgenden Verfahrensschritten:
a) Aufsetzen des Steckers (31) auf das Aggregatgehäuse (15) oder auf den Gehäuseflansch (18),
b) Verbiegen zumindest eines Haltestegs (21, 22) der Befestigungsanordnung (20) zumindest teilweise um den Steckerflansch (34) des Steckers (31), so dass der Stecker (31) durch Formschluss an dem Aggregatgehäuse (15) fixiert wird.

10. Verfahren nach Anspruch 9, mit dem folgenden zusätzlichen Verfahrensschritt vor dem Aufsetzen des Steckers (31) auf das Aggregatgehäuse (15) oder auf den Gehäuseflansch (18):
Einführen der an einer Rückseite (36) des Steckers (31) austretenden elektrischen Leitung (50) in die Öffnung (16) des Aggregatgehäuses (15), so dass die elektrische Leitung (50) nach innen in das Aggregatgehäuse (15) hineinragt.

11. Verfahren nach einem der Ansprüche 9 oder 10, mit dem folgenden zusätzlichen Verfahrensschritt vor dem Aufsetzen des Steckers (31) auf das Aggregatgehäuse (15) oder auf den Gehäuseflansch (18): Einschieben des Steckers (31) in die Ausnehmung (17) des Aggregatgehäuses (15) und/oder des Gehäuseflansches (18).

12. Verfahren nach einem der Ansprüche 9 bis 11, mit dem folgenden zusätzlichen Verfahrensschritt vor dem Aufsetzen des Steckers (31) auf das Aggregatgehäuse (15) oder auf den Gehäuseflansch (18):
Einsetzen einer Steckerdichtung (41) in eine in dem Steckersockel (35) ausgebildeten Steckernut (40).

## Claims

1. Electric motor vehicle device (10) comprising
a working means (11),
an electric drive motor (12) for driving the working means (11),
a commutation means (13) for controlling the drive motor (12),
a separately formed connector (31) to which a corresponding counter-connector (32) can be coupled electrically and mechanically,
a device housing (15) with an opening (16) through which the at least one electric line (50) extends that is led into the connector (31), and
a fastening arrangement (20) for fixing the connector (31), said fastening arrangement being arranged on the outer side of the device housing (15),
**characterized in that**
the fastening arrangement (20) comprises at least one retaining web (21) protruding outward from the device housing (15), and the retaining web (21) is at least partly deformed around a connector flange (34) of the connector (31) so that the connector (31) is fixed to the device housing (15) by positive engagement,
the device housing (15) has a housing flange (18) with a flange surface (19),
the connector flange (34) is formed as a web or frame protruding laterally from the connector (31), is formed to circumferentially extend, either partly or fully, around the connector (31), and is in surface contact with the housing flange (18), and
the connector (31) includes an electrically non-conductive connector body (33) and at least one electric line (50) retained by the connector body (33).

2. Electric motor vehicle device of claim 1, **characterized in that** the fastening arrangement (20) has at least two retaining webs (21, 22) arranged oppositely and spaced from each other, and the connector (31) is arranged between the retaining webs (21, 22), and that at least one of the two retaining webs (21, 22) is at least partly deformed around the connector flange (34) of the connector (31) so that the connector (31) is fixed to the device housing (15) by positive engagement.

3. Electric motor vehicle device (10) of one of the preceding claims, **characterized in that** the connector (21) has a connector base (35) formed at a rear side (36) of the connector (31).

4. Electric motor vehicle device (10) of one of the preceding claims, **characterized in that** a connector sealing (41) is arranged on the connector (31).

5. Electric motor vehicle device (10) of one of the preceding claims, **characterized in that** the retaining web (21, 22) is formed integrally with the device housing (15).

6. Electric motor vehicle device (10) of one of the preceding claims, **characterized in that** the device housing (15) is cylindrical in shape.

7. Electric motor vehicle device (10) of claim 6, **characterized in that** the retaining web (21, 22) is formed integrally with the housing flange (18).

8. Electric motor vehicle device (10) of one of the preceding claims, **characterized in that** a recess (17) is formed in the device housing (15) and/or in the housing flange (18), into which the connector (31) can be inserted at least in part.

9. Method for fastening at least one connector (31) of a connector/counter-connector means (30) to a motor vehicle device (10) of one of the preceding claims, the method comprising the following steps:
a) setting the connector (31) onto the device housing (15) or onto the housing flange (18),
b) deforming at least one retaining web (21, 22) of the fastening arrangement (20) at least partly around the connector flange (34) of the connector (31) so that the connector (31) is fixed on the device housing (15) by positive engagement.

10. Method of claim 9, comprising the following additional method step before setting the connector (31) onto the device housing (15) or onto the housing flange (18):
inserting the electric line (50) emerging from the rear (36) of the connector (31) into the opening (16) of the device housing (15) so that the electric line (50) extends inwards into the device housing 815).

11. Method of claim 9 or 10, comprising the following additional method step before setting the connector (31) onto the device housing (15) or onto the housing flange (18):
pushing the connector (31) into the recess (17) of the device housing (15) and/or the housing flange (18).

12. Method of claim 9 to 11, comprising the following additional method step before setting the connector (31) onto the device housing (15) or onto the housing flange (18):
inserting a connector sealing (41) into a connector groove (40) formed in the connector base (35).

## Revendications

1. Module électrique de véhicule automobile (10) avec
un dispositif de travail (11),
un moteur d'entrainement (12) électrique pour entrainer le dispositif de travail (11),
un connecteur (31) formé séparément, avec lequel un contre-connecteur (32) correspondant peut être couplé électriquement et mécaniquement,
un boitier de module (15) avec une ouverture (16) à travers laquelle s'étend au moins une ligne électrique (50) menée dans le connecteur (31), et
un dispositif de fixation (20) pour fixer le connecteur (31), disposé sur un côté extérieur du boitier de module (15),
**caractérisé en ce que**
le dispositif de fixation (20) comprend au moins une barrette de retenue (21) saillant vers l'extérieure à partir du boitier de module (15), et que la barrette de retenue (21) est déformée au moins partiellement autour une bride (34) du connecteur (31), de sorte que le connecteur (31) soit fixé sur le boitier de module (15) par engagement positif,
le boitier de module (15) comprend une bride de boitier (18) avec une surface de bride (19),
la bride (34) du connecteur est conçue comme une barrette ou un cadre saillant latéralement du connecteur (31), s'étend sur une partie ou toute la circonférence du connecteur (31) et est en contact surfacique avec la bride du boitier (18), et
le connecteur (31) comprend un corps (33) du connecteur électriquement non-conducteur et au moins une ligne (50) électrique retenue par le corps (33) du connecteur.

2. Module électrique de véhicule automobile selon la revendication 1, **caractérisé en ce que** le dispositif de fixation (20) comprend au moins deux barrettes de retenue (21, 22) opposées et écartées l'une de l'autre, et le connecteur (31) est disposé entre les barrettes de retenue (21, 22), et au moins une des deux barrettes de retenue (21, 22) est déformée au moins partiellement autour la bride (34) du connecteur (31), de sorte que le connecteur (31) soit fixé sur le boitier de module (15) par engagement positif.

3. Module électrique de véhicule automobile (10) selon l'une quelconque des revendications précédentes, **caractérisé en ce que** le connecteur (31) comprend une embase de connecteur (35) formée sur une côté arrière (36) du connecteur (31).

4. Module électrique de véhicule automobile (10) selon l'une quelconque des revendications précédentes, **caractérisé en ce qu'**un joint de connecteur (41) est disposé sur le connecteur (31).

5. Module électrique de véhicule automobile (10) selon l'une quelconque des revendications précédentes, **caractérisé en ce que** la barrette de retenue (21, 22) est formée d'un seul tenant avec le boitier de module (15).

6. Module électrique de véhicule automobile (10) selon l'une quelconque des revendications précédentes, **caractérisé en ce que** le boitier de module (15) est cylindrique.

7. Module électrique de véhicule automobile (10) selon la revendication 6, **caractérisé en ce que** la barrette de retenue (21, 22) est formée d'un seul tenant avec la bride (18) du connecteur.

8. Module électrique de véhicule automobile (10) selon l'une quelconque des revendications précédentes, **caractérisé en ce qu'**un évidement (17) est formé dans le boitier de module (15) et/ou dans la bride (18) du boitier, dans lequel évidement le connecteur (31) peut être inséré au moins partiellement.

9. Procédé de fixation d'au moins un connecteur (31) d'un dispositif connecteur/contre-connecteur (30) sur un module de véhicule automobile (10) selon l'une quelconque des revendications précédentes, le procédé comprenant les étapes suivantes:
a) placer le connecteur (31) sur le boitier de module (15) ou sur la bride de boitier (18),
b) défermer au moins une barrette de retenue (21, 22) du dispositif de fixation (20) au moins partiellement autour la bride (34) du connecteur (31), de sorte que le connecteur (31) soit fixé sur le boitier de module (15) par engagement positif.

10. Procédé selon la revendication 9, avec l'étape additionnelle suivante avant le placement du connecteur (31) sur le boitier de module (15) ou sur la bride (18) du boitier:
insérer la ligne électrique (50) sortant de l'arrière (36) du connecteur (31) dans ladite ouverture (16) du boitier de module (15), de sorte que la ligne électrique (50) s'étend vers l'intérieur du boitier de module (15).

11. Procédé selon l'une quelconque des revendications 9 ou 10, avec l'étape additionnelle suivante avant le placement du connecteur (31) sur le boitier de module (15) ou sur la bride (18) du boitier:
pousser le connecteur (31) dans l'évidement (17) du boitier de module (15) et/ou de la bride (18) du boitier.

12. Procédé selon l'une quelconque des revendications 9 à 11, avec l'étape additionnelle suivante avant le placement du connecteur (31) sur le boitier de module (15) ou sur la bride (18) du boitier:
insérer un joint de connecteur (41) dans une rainure de connecteur (40) formée dans l'embase du connecteur (35).
